# EUROPEAN PATENT SPECIFICATION

(11) **EP 1 816 876 B1**
(45) Date of publication and mention of the grant of the patent: **04.04.2012**
(21) Application number: 06002077.3
(22) Date of filing: 01.02.2006
(51) Int. Cl.: H04Q 3/00

(54) **Method and apparatus for transferring signalling connection control part messages**
System und Verfahren zur Signalling-Verbindung und Control Part Datenübertragung
Système et procédé permettant de transferer des messages de type Signalling Connection et Control Part

(43) Date of publication of application: 08.08.2007
(73) Proprietor: Nokia Siemens Networks GmbH & Co. KG, 81541 München (DE)
(72) Inventor: Bylemans, Jos, 3500 Hasselt (BE); Serroyen, Gert, 2627 Schelle (BE); Wiehe, Ulrich, 36251 Bad Hersfeld (DE)

(56) References cited:
- US-B1- 6 628 672

## Description

The present invention relates to an optimized method and apparatus for transferring SCCP messages in a Signaling System 7 communications network.

US 6,628,672 B1 relates to a method of reassembling an ordered sequence of Signaling Connection and Control Part (SCCP) message segments at the SCCP of a signaling node of a telecommunications network, where said message segments are received out of order at the signaling node. The method of Dl comprises the steps of receiving a first of the message segments at the SCCP and initiating a reassembly process for the sequence to which the received segment belongs. The received segment is stored in a memory as part of said initiated process, and thereafter the retaining segments of the SCCP message are also received and stored in the same memory. The received segments are then concatenated in the correct order to obtain an SCCP user data block. The reassembled SCCP user data block is passed to an SCCP user.

Modern communications networks generally carry two types of traffic or data. The first is the traffic which is transmitted by or delivered to a user or subscriber, and which is usually paid for by the user. That type of traffic is widely known as user traffic or subscriber traffic. The second is the traffic caused by network management applications in sending and receiving management data from network elements, known as management traffic.

In telecommunications, the management traffic is also known as signaling traffic. The term "signaling" refers to the exchange of signaling messages between various network elements such as database servers, local exchanges, transit
exchanges and user terminals. A well known protocol for transferring such signaling messages is the Signaling System 7 (SS7), also referred to as Common Channel Signaling System 7 (CCS7).

The Signaling System 7 as specified by the International Telecommunication Union (ITU) in the Q.700-series recommendations provides for all signaling tasks in today's telecommunications networks. More specifically, SS7 provides for example for:
- basic call setup, management, and tear down;
- enhanced call features such as call forwarding, cabling party name/number display, and three-way calling;
- accounting and billing;
- database operations for serviced such as authentication, roaming, local number portability (LNP), toll-free cervices and special tariff services;
- network management for the SS7 network and its connections; and
- non-call related signaling, allowing for services such as short message service (SMS) and user-to-user signaling (UUS).

The Signaling System 7 forms an independent network, in which SS7 messages are exchanged between network elements over bidirectional channels called signaling links. Signaling occurs out-of-band on dedicated channels rather than in-band on channels reserved for user traffic such as voice. Compared to in-band signaling, out-of-band signaling provides:
- faster call setup times;
- more efficient use of voice circuits; and
- support for Intelligent Network (IN) services which require signaling to network elements without voice trunks (e.g., database systems).

The elements of a SS7 network are known as signaling points, each uniquely identified by a signaling point code. Point codes are carried in signaling messages exchanged between signaling points to identify the source and destination of each message. Each signaling point uses a routing table to select the appropriate signaling path for each message.

There are three kinds of signaling points in a SS7 network: Service Switching Points (SSPs), Signaling Transfer Points (STPs), and Service Control Points (SCPs)

SSPs are switches that originate, terminate, or tandem calls. An SSP sends signaling messages to other SSPs to setup, manage, and release voice circuits required to complete a call. An SSP may also send a query message to a centralized database (an SCP) to determine how to route a call (e.g., a toll-free call). An SCP sends a response to the originating SSP containing the routing number(s) associated with the dialed number.

Network traffic between signaling points may be routed via signaling transfer points (STPs). An STP routes each incoming message to an outgoing signaling link based on routing information contained in the SS7 message. Because it acts as a network hub, an STP provides improved utilization of the SS7 network by eliminating the need for direct links between signaling points. An STP may perform global title translation, a procedure by which the destination signaling point is determined from digits present in the signaling message (e.g., the dialed 800 number, calling card number, or mobile subscriber identification number).

The SS7 uses a protocol stack, in which the hardware and software functions of the SS7 protocol are divided into functional abstractions called "levels". These levels map loosely to the Open Systems Interconnect (OSI) 7-layer model defined by the International Standards Organization (ISO).

The lower three levels are known as the Message Transfer Part (MTP). MTP Level 1 defines the physical, electrical, and functional characteristics of the digital signaling link. MTP Level 2 ensures accurate end-to-end transmission of a message across a signaling link. MTP Level 3 provides message routing between signaling points in the SS7 network.

Recent developments aim at using the Internet Protocol (IP) as a transport mechanism, partially or fully replacing the traditional MTP protocol stack. Examples can be found in IETF RFC 3331 describing an MTP L2 User Adaptation Layer (M2UA), in RFC 3332 describing an MTP L3 User Adaptation Layer (M3UA), and in RFC 3868 describing an SCCP User Adaptation Layer (SUA).

In SS7, functions are provided by so called user parts. A widely used user part is the ISDN User Part (ISUP) which defines the protocol used to set-up, manage, and release trunk circuits that carry user traffic between terminating line exchanges (e.g., between a calling party and a called party).

In some countries, the less sophisticated Telephone User Part (TUP) performs these tasks.

Another protocol in SS7, the Signaling Connection Control Part (SCCP), provides connectionless and connection-oriented network services and global title translation (GTT) capabilities above MTP Level 3. SCCP is used as the transport layer for TCAP-based services. ITU-T Recommendations Q.711-719 define the Signaling Connection Control Part.

The Transaction Capabilities Applications Part (TCAP) supports the exchange of non-circuit related data between applications across the SS7 network using the SCCP connectionless service. Queries and responses sent between SSPs and SCPs are carried in TCAP messages. In mobile networks, TCAP carries Mobile Application Part (MAP) messages sent between mobile switches and databases to support user authentication, equipment identification, and roaming.

ITU.T Recommendation Q.714 chapters 1.3.2 and 4.1.1 describe a segmentation mechanism for SCCP. Segmentation is used for connectionless transfer of a block of user data larger than can be contained in a single UDT or XUDT message. The SCCP provides this service by segmenting a large block of user data into smaller blocks (called segments), transmitting the segments as user data in XUDT messages, and reassembling the segments in the destination node before passing the original block of user data to the (remote) destination SCCP user. At the destination SCCP, this reassembling process is called reassembly.

In chapter 4.1.2 of Q.714, a procedure known as the message change procedure is described. For example, an incoming UDT message may be converted into a single XUDT message, or multiple XUDT messages if segmentation occurs.

If segmentation and/or message change occurs at an intermediate node, for example at a SS7 security gateway as described in Section 4 of 3GPP TR 29.800 V1.0.1 dated December 2005, available from
http://www.3gpp.org/ftp/Specs/archive/29_series/29.800/29800-101.zip, several problems may occur when attempting to reconstruct the original message.

For example, when the message type is changed at the intermediate node from XUDT to UDT, optional parameters carried in a XUDT message such as the hop counter as specified in Q.712 chapter 2.19 are lost.

The procedures of Q.714 also lead to unsatisfactory results in a situation where both the intermediate node and the originating node apply segmentation. By the Q.714 procedure, both nodes would use the same calling party address and a locally unique Segmentation Local Reference. As the Segmentation Local Reference is not globally unique, reassembly errors may occur if both the intermediate node and the originating node incidentally use the same Segmentation Local Reference.

It is therefore an object of the present invention to provide an improved method for transferring SCCP messages.

It is another object of the present invention to provide optimized apparatuses for transferring SCCP messages.

In accordance with the foregoing objects, there is provided by the invention a method for transferring SCCP messages, comprising the steps of:
- at a first network element, receiving a first SCCP message or a first set of segmented SCCP messages relating to a single segmentation process;
- determining a set of SCCP message parameters from the first message or the first set of messages that will be modified or removed in a processing step of the first network element;
- storing the information contained in said set of SCCP message parameters;
- processing the message or the received set of messages at a processing function of the first network element, yielding a second SCCP message or a second set of SCCP messages relating to a single segmentation process;
- including the stored information in the second message or the second set of messages in the form of SCCP user data; and
- sending the second message or the second set of messages.

Note that segmentation handling may preferentially occur as follows:
- Option A): If a first segmented set of messages is received, the data contained therein may be reassembled in the first network element, processed, and segmented again for transmission by the second set of messages.
- Option B): If a first segmented set of messages is received, the data contained therein may be reassembled in the first network element, processed, and transmitted as an unsegmented second message.
- Option C): If a first segmented set of messages is received, the first network element may choose not to reassemble the data contained therein but process the segmented messages individually, segment all or some the individual message segments if necessary and transmit the twice segmented messages as a segmented second set of messages.
- Option D): If a first unsegmented message is received, the processing may yield a set of segmented messages which is transmitted as the second set of messages.
- Option E): If an unsegmented first message is received, the processing may yield an unsegmented message which is then transmitted as an unsegmented second message.

The method thereby allows preserving SCCP message parameters that would otherwise be lost in the processing at the first network element. For example, when the processing step converts a XUDT SCCP message to a UDT SCCP message, optional parameters carried in a XUDT message such as the hop counter as specified in Q.712 chapter 2.19 may be preserved. Preservation is accomplished by including the information conveyed by such parameters in the form of SCCP user data, for example using TCAP messages in the preferred embodiment.

In an embodiment, the inventive method is complemented by further steps to restore the preserved parameters, carried out in a second network element.

The invention further provides a network element capable of sending SCCP message parameters as SCCP user data in order to preserve a SCCP message's original parameters. The invention further provides a network element capable of receiving SCCP user data comprising a SCCP message's original parameters and restoring that SCCP message.

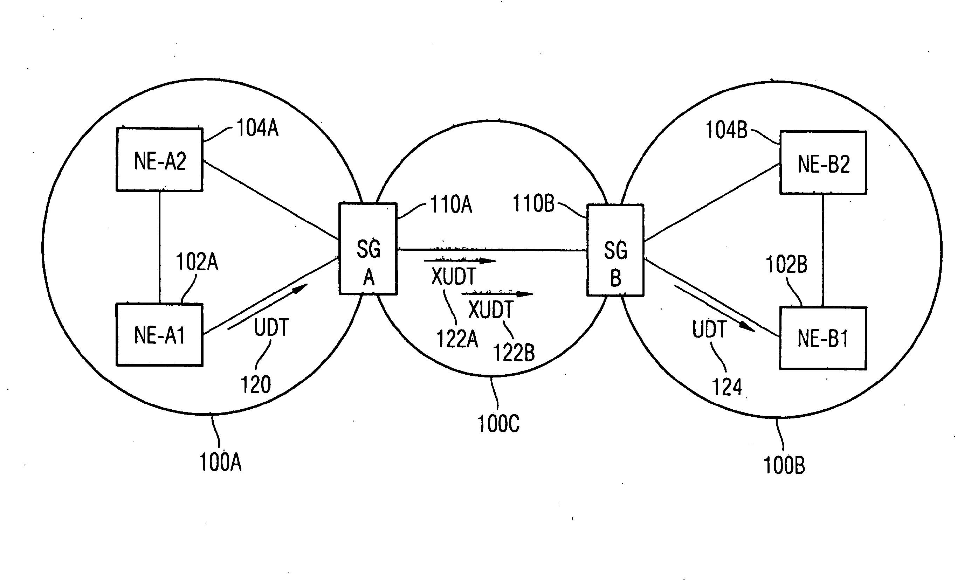

In the following, the invention will be described in more detail in the form of a embodiments which are better understood in accordance with the enclosed figure.

In the figure, there is shown a simplified block diagram of a typical network arrangement. The network arrangement shows two networks 100A, 100B which are interconnected by a third network 100C. The first and second networks 100A, 100B may, for example, be national SS7 networks, with the third network 100C then being, for example, an international SS7 network. In another exemplary configuration 100A and 100B are the SS7 networks of different carriers and 100C is the national interconnection SS7 network.

The first network 100A and the second network 100B are each shown to comprise network elements 102, 104 being interconnected. These network elements may be any known SS7 network elements, such as SSPs, STPs, SCPs as discussed above. Networks 100A and 100B may comprise an arbitrary number of network elements.

The interconnecting network 100C comprises a first network element 110A interconnecting with the first network 100A and a second network element 110B interconnecting with the second network 100B. First and second network elements 110A, 110B are representative of any number of interconnecting network elements. Because they provide gateway functions between the networks they interconnect, network elements 110 are often referred to as gateway elements, or gateways. In embodiments, the gateway elements 110 may comprise a SS7 security gateway (SG). Network 100C may also comprise an arbitrary number of network elements.

Gateway elements 110, on the other hand, may also be considered as belonging to networks 100, respectively. This view is adopted without loss of generality in the following.

In the example, the first gateway network element 110A of network 100A is designed to receive a first SCCP message 120, a UDT message, for processing. The processing in the first network element 110A is shown to result in the creation of a second set of messages 122, two XUDT messages 122A and 122B, i.e., segmentation occurs in first network element 110A.

In order to avoid the previously discussed ambiguity occurring when the received message is already a segmented message, i.e., both NE-A1 102A and SG A 110A use the same calling party address in the segmentation process in accordance with Q.714, SG A 110A uses a local address instead of the original calling party address along with the locally unique Segmentation Local Reference, thereby creating a globally unique identification for the segmentation process and allowing unambiguous reassembly. Note that this approach deviates from the Q.714 Recommendation by solving the discussed segmentation problem that is not solved by Q.714. The present approach, as is readily apparent, provides a solution that is compatible with existing Q.714 procedures and therefore improves Q.714 in a compatible way.

In this process, the original calling party address will be changed by the first network element 110A. Other SCCP message parameter information such as SCCP message type may also be affected. In accordance with the present invention, the first network element 110A identifies such information, stores it, and inserts it into the outgoing XUDT messages 122A, 122B in the form of SCCP user data before transmitting the outgoing second messages 122.

The second network element 110B receives second message(s) 122. The processing in the second network element 110B is configured such that the SCCP message parameter information, originally carried in UDT message 120, is extracted from the SCCP user data of XUDT messages 122. Then the message may be processed in accordance with a processing function in the second network element 110B. In the depicted example, the result of this processing is a third single UDT message 124, which when constructed from the SCCP parameters carried in the second messages 122 would have wrong calling party address (SG A instead of NE-A1). To overcome this, the original parametric information from the first message 120 is restored and written to the third message 124 before said message is transmitted.

Restoring the calling party address in UDT message 124 is particularly important for the message return procedure as specified in Q.714 chapter 4.2. If for example the UDT message 124 cannot be processed at its destination, NE-B1 102B, or at any transit node (not shown) between SG-B 110B and NE-B1 102B for any of the reasons of Q.714 chapter 4.2 or 2.8, a UDTS message (not shown) shall be sent to the messages origination, which is NE-A1 102A and not SG A 110A.

In another application scenario of the present invention (not shown in the figure), the invention can be used to preserve information carried in the first message or a first set of messages 120 that cannot be carried in the second message(s) 122, for example if a XUDT message is received by SG A 110A and only UDT messages can be conveyed across network 100C.

A XUDT message may comprise extended parameters such as SCCP protocol class, SCCP segmenting local reference, SCCP hop counter, or SCCP importance parameter, which are not supported for UDT messages. To overcome this deficiency, with the present invention the parametric information may be transported as SCCP user data across intermediate network 100C. The original message(s) can then be restored at the entrance of destination network 100B, i.e., SG B 110B. In an advantageous embodiment, counting parameters such as the SCCP hop counter may be modified accordingly when the message is restored in order to account for the additional network elements traversed. Other status information carrying parameters may also be updated after their restoration.

Numerous other embodiments employing the present invention can be derived from the exemplary embodiment described above without applying inventive faculty, including embodiments where any of a UDT, XUDT, or LUDT message (or a set thereof) is converted into any of a UDT, XUDT, or LUDT message (or a set thereof), with un-segmented or segmented messages transferred as segmented or un-segmented messages, including any combination thereof.

In the following, a preferred method for transferring the parametric SCCP information is described. TCAP, as discussed above, is a well-known and widely used user protocol of SCCP. Thus, TCAP capabilities are often present at nodes, allowing the present invention to convey the parametric SCCP information in a TCAP message.

In the preferred embodiment, when a SCCP message is changed in an intermediate node 110A, for example by changing the message type or by replacing the SCCP calling party address for segmentation purposes, the intermediate node 110A will format a TCAP UNIDIRECTIONAL message that includes the following:
- the SCCP user data originally received as payload of the received SCCP message 120; said SCCP user data is to be delivered to the final destination 102B after (optional) processing at the intermediate node; and
- the original SCCP parametric information extracted from the original SCCP message and subject to replacement or deletion by the intermediate node's processing function; such original SCCP parametric information being useful or necessary to restore the original message parameters for the SCCP message deliver after traversal of intermediate network 100C.

The SCCP user data and the original SCCP parametric information will be included as 2 different parts in the component portion of the TCAP-UNIDIRECTIONAL message, which is then included as new SCCP user data in the message(s) 122 that is (are) sent out by the intermediate node 110A.

The receiving (intermediate) node 110B may restore the original SCCP user data and the original SCCP parametric information TCAP-message, thus restoring the original message 120 as message 124.

The original SCCP parametric information contains the characteristics of the original SCCP message 120, including optional and mandatory parameters such as:
- SCCP calling address;
- SCCP message type;
- SCCP protocol class;
- SCCP importance parameter;
- SCCP segmenting local reference;
- SCCP importance parameter; and/or
- SCCP hop counter.

While it is preferred that a network element 110 is capable of performing the steps of extracting the relevant parameters from an SCCP message and including it as SCCP user data and also performing the inverse operation to allow bidirectional communication in accordance with the teachings of the present invention, other embodiments may employ physically and/or logically different entities for these tasks, for example for load balancing purposes.

In the preferred embodiment, the invention is used to preserve and restore SCCP message parameters not including the message's MTP parameters such as OPC, DPC, etc. as these will normally be determined by the regular routing process and not be valid across network boundaries.

## Claims

1. A method for transferring SCCP messages, comprising the steps of:
- at a first network element (110A), receiving a first SCCP message (120) or a first set of segmented SCCP messages relating to a single segmentation process;
- determining a set of SCCP message parameters from the first message (120) or the first set of messages that will be modified or removed in a processing step of the first network element;
- storing the information contained in said set of SCCP message parameters;
- processing the message or the received set of messages at a processing function of the first network element, yielding a second SCCP message or a second set of SCCP messages (122) relating to a single segmentation process;
- including the stored information in the second message or the second set of messages (122) in the form of SCCP user data; and
- sending the second message or the second set of messages (122).

2. The method of claim 1, further comprising the steps of:
- receiving the second message or the second set of messages (122) at a second network element (110B) ;
- extracting the information included in the second message or the second set of messages ;
- restoring the set of SCCP message parameters from said information; and
- including the restored set of SCCP message parameters in an outgoing third SCCP message (124) or an outgoing third set of SCCP messages relating to a single segmentation process.

3. The method of claim 2, wherein the steps of restoring the set of SCCP parameters and including the restored set in the third message (124) or third set of messages are configured such that the first SCCP message (120) or set of SCCP messages is fully restored as the third SCCP message (124) or set of SCCP messages.

4. The method of claim 3, wherein message elements of the third SCCP message (124) or set of SCCP messages containing counting parameters or status information are altered to appropriately reflect the processing and/or transferring history.

5. The method of any of claims 1 to 4, wherein the information contained in the set of SCCP message parameters is included in the second message or the second set of messages (122) using the TCAP layer.

6. The method of claim 5, comprising the steps of :
- extracting first SCCP user data from the first message (120) or the first set of messages;
- creating second SCCP user data comprising the first SCCP user data and the information contained in the set of SCCP message parameters;
- including the second SCCP user data in a TCAP UNIDIRECTIONAL message; and
- including the TCAP UNIDIRECTIONAL message in the second message or the second set of messages (122).

7. The method of claim 6 when dependent on claim 2, comprising the steps of:
- extracting the TCAP UNIDIRECTIONAL message from the second message or the second set of messages (122);
- restoring the set of SCCP message parameters;
- restoring the first SCCP user data; and
- including the restored set of SCCP message parameters and the first SCCP user data in the third SCCP message (124) or the third set of SCCP messages.

8. A network element (110) for transferring SCCP messages, comprising:
- means for receiving a first SCCP message (120) or a first set of segmented SCCP messages relating to a single segmentation process;
- means for determining a set of SCCP message parameters from the first message (120) or the first set of messages that will be modified or removed by a processing function of the first network element;
- storing means for storing the information contained in said set of SCCP message parameters;
- a processing function for processing the message or the received set of messages for yielding a second SCCP message or a second set of SCCP messages (122) relating to a single segmentation process;
- means for including the stored information in the second message or the second set of messages in the form of SCCP user data; and
- means for sending the second message or the second set of messages (122).

9. The network element of claim 8, configured to include the information contained in the set of SCCP message parameters in the second message or the second set of messages (122) using the TCAP layer.

10. The network element of claim 9, further comprising:
- means extracting first SCCP user data from the first message (120) or the first set of messages;
- means for creating second SCCP user data comprising the first SCCP user data and the information contained in the set of SCCP message parameters;
- means for including the second SCCP user data in a TCAP UNIDIRECTIONAL message; and
- means for including the TCAP UNIDIRECTIONAL message in the second message or the second set of messages (122).

11. A network element (110) for transferring SCCP messages, comprising:
- means for receiving a second SCCP message or a second set of segmented SCCP messages (122) relating to a single segmentation process, the second message or the second set of messages comprising information contained in SCCP user data, the information comprising SCCP message parameters extracted from a first SCCP message (120) or a first set of SCCP messages;
- means for extracting the information included in the second message or the second set of messages (122);
- means for restoring a set of SCCP message parameters from said information; and
- means for including the restored set of SCCP message parameters in an outgoing third SCCP message (124) or an outgoing third set of SCCP messages relating to a single segmentation process.

12. The network element of claim 11, further configured to fully restore the first SCCP message (120) or set of SCCP messages as the third SCCP message (124) or set of SCCP messages.

13. The network element of claim 12, further configured to alter message elements of the third SCCP message or set of SCCP messages containing counting parameters or status information to appropriately reflect the processing and/or transferring history.

14. The network element of any of claims 11 to 13, further comprising:
- means for extracting a TCAP UNIDIRECTIONAL message from the second message or the second set of messages (122), the TCAP UNIDIRECTIONAL message comprising second SCCP user data, the second SCCP user data comprising the information contained in the set of SCCP message parameters and first SCCP user data extracted from the first message or the first set of messages;
- means for restoring the set of SCCP message parameters;
- means for restoring the first SCCP user data; and
- means for including the restored set of SCCP message parameters and the first SCCP user data in the third SCCP message (124) or the third set of SCCP messages.

## Patentansprüche

1. Verfahren zum Transferieren von SCCP-Nachrichten, mit den folgenden Schritten:
- Empfangen einer ersten SCCP-Nachricht (120) oder einer ersten Menge von segmentierten SCCP-Nachrichten bezüglich eines einzigen Segmentierungsprozesses in einem ersten Netzelement (110A);
- Bestimmen einer Menge von SCCP-Nachrichtenparametern aus der ersten Nachricht (120) oder der ersten Menge von Nachrichten, die in einem Verarbeitungsschritt des ersten Netzelements modifiziert oder entfernt werden wird;
- Speichern der in der Menge von SCCP-Nachrichtenparametern enthaltenen Informationen;
- Verarbeiten der Nachricht oder der empfangenen Menge von Nachrichten in einer Verarbeitungsfunktion des ersten Netzelements, wodurch sich eine zweite SCCP-Nachricht oder eine zweite Menge von SCCP-Nachrichten (122) bezüglich eines einzigen Segmentierungsprozesses ergibt;
- Aufnehmen der gespeicherten Informationen in die zweite Nachricht oder die zweite Menge von Nachrichten (122) in Form von SCCP-Benutzerdaten; und
- Senden der zweiten Nachricht oder der zweiten Menge von Nachrichten (122).

2. Verfahren nach Anspruch 1, ferner mit den folgenden Schritten:
- Empfangen der zweiten Nachricht oder der zweiten Menge von Nachrichten (122) in einem zweiten Netzelement (110B);
- Extrahieren der in der zweiten Nachricht oder der zweiten Menge von Nachrichten enthaltenen Informationen;
- Wiederherstellen der Menge von SCCP-Nachrichtenparametern aus den Informationen; und
- Aufnehmen der wiederhergestellten Menge von SCCP-Nachrichtenparametern in eine abgehende dritte SCCP-Nachricht (124) oder eine abgehende dritte Menge von SCCP-Nachrichten bezüglich eines einzigen Segmentierungsprozesses.

3. Verfahren nach Anspruch 2, wobei die Schritte des Wiederherstellens der Menge von SCCP-Parametern und des Aufnehmens der wiederhergestellten Menge in die dritte Nachricht (124) oder dritte Menge von Nachrichten so ausgelegt sind, dass die erste SCCP-Nachricht (120) oder Menge von SCCP-Nachrichten voll als die dritte SCCP-Nachricht (124) oder Menge von SCCP-Nachrichten wiederhergestellt wird.

4. Verfahren nach Anspruch 3, wobei Nachrichtenelemente der dritten SCCP-Nachricht (124) oder Menge von SCCP-Nachrichten, die Zählparameter oder Statusinformationen enthalten, geändert werden, um die Verarbeitungs- und/oder Transferhistorie angemessen widerzuspiegeln.

5. Verfahren nach einem der Ansprüche 1 bis 4, wobei die in der Menge von SCCP-Nachrichtenparametern enthaltenen Informationen unter Verwendung der TCAP-Schicht in die zweite Nachricht oder die zweite Menge von Nachrichten (122) aufgenommen werden.

6. Verfahren nach Anspruch 5, mit den folgenden Schritten:
- Extrahieren von ersten SCCP-Benutzerdaten aus der ersten Nachricht (120) oder der ersten Menge von Nachrichten;
- Erzeugen von zweiten SCCP-Benutzerdaten, die die ersten SCCP-Benutzerdaten und die in der Menge von SCCP-Nachrichtenparametern enthaltenen Informationen umfassen;
- Aufnehmen der zweiten SCCP-Benutzerdaten in eine Nachricht TCAP UNIDIRECTIONAL; und
- Aufnehmen der Nachricht TCAP UNIDIRECTIONAL in die zweite Nachricht oder die zweite Menge von Nachrichten (122).

7. Verfahren nach Anspruch 6 bei Abhängigkeit von Anspruch 2, mit den folgenden Schritten:
- Extrahieren der Nachricht TCAP UNIDIRECTIONAL aus der zweiten Nachricht oder der zweiten Menge von Nachrichten (122);
- Wiederherstellen der Menge von SCCP-Nachrichtenparametern;
- Wiederherstellen der ersten SCCP-Benutzerdaten; und
- Aufnehmen der wiederhergestellten Menge von SCCP-Nachrichtenparametern und der ersten SCCP-Benutzerdaten in die dritte SCCP-Nachricht (124) oder die dritte Menge von SCCP-Nachrichten.

8. Netzelement (110) zum Transferieren von SCCP-Nachrichten, umfassend:
- Mittel zum Empfangen einer ersten SCCP-Nachricht (120) oder einer ersten Menge von segmentierten SCCP-Nachrichten bezüglich eines einzigen Segmentierungsprozesses;
- Mittel zum Bestimmen einer Menge von SCCP-Nachrichtenparametern aus der ersten Nachricht (120) oder der ersten Menge von Nachrichten, die durch eine Verarbeitungsfunktion des ersten Netzelements modifiziert oder entfernt werden wird;
- Speichermittel zum Speichern der in der Menge von SCCP-Nachrichtenparametern enthaltenen Informationen;
- eine Verarbeitungsfunktion zum Verarbeiten der Nachricht oder der empfangenen Menge von Nachrichten zum Ergeben einer zweiten SCCP-Nachricht oder einer zweiten Menge von SCCP-Nachrichten (122) bezüglich eines einzigen Segmentierungsprozesses;
- Mittel zum Aufnehmen der gespeicherten Informationen in die zweite Nachricht oder die zweite Menge von Nachrichten in Form von SCCP-Benutzerdaten; und
- Mittel zum Senden der zweiten Nachricht oder der zweiten Menge von Nachrichten (122).

9. Netzelement nach Anspruch 8, das dafür ausgelegt ist, die in der Menge von SCCP-Nachrichtenparametern enthaltenen Informationen unter Verwendung der TCAP-Schicht in die zweite Nachricht oder die zweite Menge von Nachrichten (122) aufzunehmen.

10. Netzelement nach Anspruch 9, ferner umfassend:
- Mittel zum Extrahieren von ersten SCCP-Benutzerdaten aus der ersten Nachricht (120) oder der ersten Menge von Nachrichten;
- Mittel zum Erzeugen von zweiten SCCP-Benutzerdaten, die die ersten SCCP-Benutzerdaten und die in der Menge von SCCP-Nachrichtenparametern erhaltenen Informationen umfassen;
- Mittel zum Aufnehmen der zweiten SCCP-Benutzerdaten in eine Nachricht TCAP UNIDIRECTIONAL; und
- Mittel zum Aufnehmen der Nachricht TCAP UNIDIRECTIONAL in die zweite Nachricht oder die zweite Menge von Nachrichten (122).

11. Netzelement (110) zum Transferieren von SCCP-Nachrichten, umfassend:
- Mittel zum Empfangen einer zweiten SCCP-Nachricht oder einer zweiten Menge von segmentierten SCCP-Nachrichten (122) bezüglich eines einzigen Segmentierungsprozesses, wobei die zweite Nachricht oder die zweite Menge von Nachrichten in SCCP-Benutzerdaten enthaltene Informationen umfasst, wobei die Informationen aus einer ersten SCCP-Nachricht (120) oder einer ersten Menge von SCCP-Nachrichten extrahierte SCCP-Nachrichtenparameter umfassen;
- Mittel zum Extrahieren der in der zweiten Nachricht oder der zweiten Menge von Nachrichten (122) enthaltenen Informationen;
- Mittel zum Wiederherstellen einer Menge von SCCP-Nachrichtenparametern aus den Informationen; und
- Mittel zum Aufnehmen der wiederhergestellten Menge von SCCP-Nachrichtenparametern in eine abgehende dritte SCCP-Nachricht (124) oder eine abgehende dritte Menge von SCCP-Nachrichten bezüglich eines einzigen Segmentierungsprozesses.

12. Netzelement nach Anspruch 11, das ferner dafür ausgelegt ist, die erste SCCP-Nachricht (120) oder Menge von SCCP-Nachrichten voll als die dritte SCCP-Nachricht (124) oder Menge von SCCP-Nachrichten wiederherzustellen.

13. Netzelement nach Anspruch 12, das ferner dafür ausgelegt ist, Nachrichtenelemente der dritten SCCP-Nachricht oder Menge von SCCP-Nachrichten, die Zählparameter oder Statusinformationen enthalten, zu ändern, um die Verarbeitungs- und/oder Transferhistorie angemessen widerzuspiegeln.

14. Netzelement nach einem der Ansprüche 11 bis 13, ferner umfassend:
- Mittel zum Extrahieren einer Nachricht TCAP UNIDIRECTIONAL aus der zweiten Nachricht oder der zweiten Menge von Nachrichten (122), wobei die Nachricht TCAP UNIDIRECTIONAL zweite SCCP-Benutzerdaten umfasst, wobei die zweiten SCCP-Benutzerdaten die in der Menge von SCCP-Nachrichtenparametern enthaltenen Informationen und aus der ersten Nachricht oder der ersten Menge von Nachrichten extrahierte erste SCCP-Benutzerdaten umfassen;
- Mittel zum Wiederherstellen der Menge von SCCP-Nachrichtenparametern;
- Mittel zum Wiederherstellen der ersten SCCP-Benutzerdaten; und
- Mittel zum Aufnehmen der wiederhergestellten Menge von SCCP-Nachrichtenparametern und der ersten SCCP-Benutzerdaten in die dritte SCCP-Nachricht (124) oder die dritte Menge von SCCP-Nachrichten.

## Revendications

1. Un procédé de transfert de messages SCCP, comprenant les opérations suivantes :
- sur un premier élément de réseau (110A), la réception d'un premier message SCCP (120) ou d'un premier ensemble de messages SCCP segmentés relatif à un processus de segmentation unique,
- la détermination d'un ensemble de paramètres de message SCCP à partir du premier message (120) ou du premier ensemble de messages qui sera modifié ou supprimé au cours d'une opération de traitement du premier élément de réseau,
- la conservation en mémoire des informations contenues dans ledit ensemble de paramètres de message SCCP,
- le traitement du message ou de l'ensemble de messages reçu sur une fonction de traitement du premier élément de réseau, de façon à produire un deuxième message SCCP ou un deuxième ensemble de messages SCCP (122) relatif à un processus de segmentation unique,
- l'inclusion des informations conservées en mémoire dans le deuxième message ou le deuxième ensemble de messages (122) sous la forme de données d'utilisateur SCCP, et
- l'envoi du deuxième message ou du deuxième ensemble de messages (122).

2. Le procédé selon la revendication 1, comprenant en outre les opérations suivantes :
- la réception du deuxième message ou du deuxième ensemble de messages (122) sur un deuxième élément de réseau (110B),
- l'extraction des informations incluses dans le deuxième message ou le deuxième ensemble de messages,
- la restauration de l'ensemble de paramètres de message SCCP à partir desdites informations, et
- l'inclusion de l'ensemble restauré de paramètres de message SCCP dans un troisième message SCCP sortant (124) ou un troisième ensemble de messages SCCP sortant relatif à un processus de segmentation unique.

3. Le procédé selon la revendication 2, dans lequel les opérations de restauration de l'ensemble de paramètres SCCP et l'inclusion de l'ensemble restauré dans le troisième message (124) ou le troisième ensemble de messages sont configurées de sorte que le premier message SCCP (120) ou l'ensemble de messages SCCP soit entièrement restauré sous la forme du troisième message SCCP (124) ou de l'ensemble de messages SCCP.

4. Le procédé selon la revendication 3, dans lequel des éléments de message du troisième message SCCP (124) ou de l'ensemble de messages SCCP contenant des paramètres de comptage ou des informations d'état sont modifiés de façon à refléter de manière appropriée l'historique de traitement et/ou de transfert.

5. Le procédé selon l'une quelconque des revendications 1 à 4, dans lequel les informations contenues dans l'ensemble de paramètres de message SCCP sont incluses dans le deuxième message ou le deuxième ensemble de messages (122) au moyen de la couche TCAP.

6. Le procédé selon la revendication 5, comprenant les opérations suivantes :
- l'extraction de premières données d'utilisateur SCCP du premier message (120) ou du premier ensemble de messages,
- la création de deuxièmes données d'utilisateur SCCP comprenant les premières données d'utilisateur SCCP et les informations contenues dans l'ensemble de paramètres de message SCCP,
- l'inclusion des deuxièmes données d'utilisateur SCCP dans un message UNIDIRECTIONNEL TCAP, et
- l'inclusion du message UNIDIRECTIONNEL TCAP dans le deuxième message ou le deuxième ensemble de messages (122).

7. Le procédé selon la revendication 6 lorsqu'elle dépend de la revendication 2, comprenant les opérations suivantes :
- l'extraction du message UNIDIRECTIONNEL TCAP du deuxième message ou du deuxième ensemble de messages (122),
- la restauration de l'ensemble de paramètres de message SCCP,
- la restauration des premières données d'utilisateur SCCP, et
- l'inclusion de l'ensemble restauré de paramètres de message SCCP et des premières données d'utilisateur SCCP dans le troisième message SCCP (124) ou le troisième ensemble de messages SCCP.

8. Un élément de réseau (110) destiné au transfert de messages SCCP, comprenant :
- un moyen de réception d'un premier message SCCP (120) ou d'un premier ensemble de messages SCCP segmentés relatif à un processus de segmentation unique,
- un moyen de détermination d'un ensemble de paramètres de message SCCP à partir du premier message (120) ou du premier ensemble de messages qui sera modifié ou supprimé par une fonction de traitement du premier élément de réseau,
- un moyen de conservation en mémoire destiné à la conservation en mémoire des informations contenues dans ledit ensemble de paramètres de message SCCP,
- une fonction de traitement destinée au traitement du message ou l'ensemble de messages reçu de façon à produire un deuxième message SCCP ou un deuxième ensemble de messages SCCP (122) relatif à un processus de segmentation unique,
- un moyen d'inclusion des informations conservées en mémoire dans le deuxième message ou le deuxième ensemble de messages sous la forme de données d'utilisateur SCCP, et
- un moyen d'envoi du deuxième message ou du deuxième ensemble de messages (122).

9. L'élément de réseau selon la revendication 8, configuré de façon à inclure les informations contenues dans l'ensemble de paramètres de message SCCP dans le deuxième message ou le deuxième ensemble de messages (122) au moyen de la couche TCAP.

10. L'élément de réseau selon la revendication 9, comprenant en outre :
- un moyen d'extraction de premières données d'utilisateur SCCP du premier message (120) ou du premier ensemble de messages,
- un moyen de création de deuxièmes données d'utilisateur SCCP comprenant les premières données d'utilisateur SCCP et les informations contenues dans l'ensemble de paramètres de message SCCP,
- un moyen d'inclusion des deuxièmes données d'utilisateur SCCP dans un message UNIDIRECTIONNEL TCAP, et
- un moyen d'inclusion du message UNIDIRECTIONNEL TCAP dans le deuxième message ou le deuxième ensemble de messages (122).

11. Un élément de réseau (110) destiné au transfert de messages SCCP, comprenant :
- un moyen de réception d'un deuxième message SCCP ou d'un deuxième ensemble de messages SCCP segmentés (122) relatif à un processus de segmentation unique, le deuxième message ou le deuxième ensemble de messages comprenant des informations contenues dans des données d'utilisateur SCCP, les informations comprenant des paramètres de message SCCP extraits d'un premier message SCCP (120) ou d'un premier ensemble de messages SCCP,
- un moyen d'extraction des informations incluses dans le deuxième message ou le deuxième ensemble de messages (122),
- un moyen de restauration d'un ensemble de paramètres de message SCCP à partir desdites informations, et
- un moyen d'inclusion de l'ensemble restauré de paramètres de message SCCP dans un troisième message SCCP sortant (124) ou un troisième ensemble de messages SCCP sortant relatif à un processus de segmentation unique.

12. L'élément de réseau selon la revendication 11, configuré en outre de façon à restaurer totalement le premier message SCCP (120) ou un ensemble de messages SCCP sous la forme du troisième message SCCP (124) ou d'un ensemble de messages SCCP

13. L'élément de réseau selon la revendication 12, configuré en outre de façon à modifier des éléments de message du troisième message SCCP ou de l'ensemble de messages SCCP contenant des paramètres de comptage ou des informations d'état de façon à refléter de manière appropriée l'historique de traitement et/ou de transfert.

14. L'élément de réseau selon l'une quelconque des revendications 11 à 13, comprenant en outre :
- un moyen d'extraction d'un message UNIDIRECTIONNEL TCAP du deuxième message ou du deuxième ensemble de messages (122), le message UNIDIRECTIONNEL TCAP comprenant des deuxièmes données d'utilisateur SCCP, les deuxièmes données d'utilisateur SCCP comprenant les informations contenues dans l'ensemble de paramètres de message SCCP et les premières données d'utilisateur SCCP extraites du premier message ou du premier ensemble de messages,
- un moyen de restauration de l'ensemble de paramètres de message SCCP,
- un moyen de restauration des premières données d'utilisateur SCCP, et
- un moyen d'inclusion de l'ensemble restauré de paramètres de message SCCP et des premières données d'utilisateur SCCP dans le troisième message SCCP (124) ou le troisième ensemble de messages SCCP.
